# EUROPEAN PATENT APPLICATION

(11) **EP 1 505 526 A1**
(43) Date of publication of application: **09.02.2005**
(21) Application number: 03405584.8
(22) Date of filing: 07.08.2003
(51) Int. Cl.: G06F 17/60

(54) **Peer-to-peer computing system**

(71) Applicant: ABB Technology FLB Aktiebolag, 113 96 Stockholm (SE)
(72) Inventor: Mallick, Vishal, 8105 Regensdorf (CH); Tan, Hock Ann, 5415 Nussbaumen (CH)
(74) Representative: ABB Patent Attorneys

(57) **Abstract**

The present invention is concerned with the utilisation of tangible assets (11), and in particular with an optimization of the occupancy rate of rooms dedicated to a single purpose such as conference rooms. In order to facilitate usage of the conference room during low periods by potential co-users, the peer-to-peer sharing approach known for digital or intangible assets is adapted. The tangible asset (11) is advertised over a peer-to-peer network, and peers (2) other than the peer (1) associated with the asset-owner are enabled to make a reservation for a forthcoming use of the tangible asset (11) via a reservation or booking facility (10).

## Description

### FIELD OF THE INVENTION

The invention is concerned with the utilisation of tangible and depreciating assets, and in particular with an optimization of the occupancy rate of space dedicated to a single purpose such as conferencing or workpoints. It departs from a peer-to-peer computing system for sharing resources as described in the preamble of claim 1.

### BACKGROUND OF THE INVENTION

A company or property-owner usually has leasing, rental or true-ownership of real estate assets, such as an office building, a conferencing centre, a concert hall, sports facilities or a non-commercial building such as a school building. Within these buildings, some rooms or spaces are dedicated to certain special uses and mostly the equipment and facilities in these rooms or spaces are fixed at high cost. For example, conference rooms are equipped with devices such as beamers, overhead projectors, white boards, conference tables and telephony devices, and the sports facilities comprise special sports fields or halls, e.g. for tennis or squash. More often than not, these real-estate assets are poorly utilized, with an occupancy rate of less than 50% in normal working hours. During non-working hours, the conference rooms may be totally un-utilised, "standing still", while depreciating in value over time.

In order to improve the utilization of these assets and to provide higher convenience, users are being provided with reservation systems. However, standard resource scheduling systems are not adapted for the case of two or more parties wanting to pool and share their resources, and to that purpose wanting to expose their ressources to each other. For instance, a hotel near an office or two office buildings near each other might like to share their meeting rooms with each other.

In the European Patent Application 03405358.7, a system for handling the flow of visitors or clients temporarily admitted to some business premises such as an office building is disclosed. The costs arising in connection with the activities or consumption of resources by the visitor or client, such as his or her reception or the occupation of a conference room in connection with the visit, are forwarded to a "premises resources planning" or accounting system without any interaction of an additional person. To that purpose an accounting module or program is connected via a communication link to various subsystems dedicated to services such as announcement and reception of the visitor or else conference room reservation.

In its simplest form, a peer-to-peer (P2P) network is created when two or more PCs on the same hierarchical level, so-called "peers", are connected and share resources without going through a separate server computer. A P2P network can be an ad hoc connection of a couple of computers connected via a Universal Serial Bus to transfer files, or a P2P network can be a network on a much larger scale in which special protocols and applications set up direct relationships among users over the Internet. Many P2P systems were built for delivering a certain type of service, such as music file sharing or instant messaging. More recent P2P services let users search for and download movies, software, video games, photographs, and books― indeed any type of work that can be stored in digital form.

Although some so-called "hybrid" peer-to-peer networks in fact rely on a central server to keep track of users and available files, the actual communication and sharing of information in all P2P networks takes place between individual computers. The central servers play only a role in making the system function, as individual users just log onto the central server to find out who is online and who has the file they want. The central server then tells a user who has the requested file and provides the relevant online contact information. The user then connects to that other person's computer directly and downloads the desired information.

### DESCRIPTION OF THE INVENTION

It is therefore an objective of the invention to increase the utilization of tangible assets or resources. This objective is achieved a peer-to-peer computing system and method according to the claims 1 and 7, and a peer node according to claim 8. Further preferred embodiments are evident from the dependent patent claims.

According to the invention, tangible assets or resources belonging to a particular asset-owner are shared with other potential co-users in a facilitated way by adapting the peer-to-peer sharing approach known for digital or intangible assets. Contrary to the latter, the tangible assets under consideration cannot be copied or downloaded, hence the adapted sharing approach includes a reservation or booking facility for the announcement of a forthcoming use of the tangible asset by a co-user. Both the asset-owner and the co-user participate in a peer-to-peer computing system via first and second peer nodes respectively.

In a preferred embodiment of the invention, those assets that the asset-owner wants to make available via a first peer node are mapped to the reservation tool of a co-user at a second peer node. The potential co-user at the second peer node thus may dispose of the assets in a usual way, i.e. as if they in fact were his own and as such assigned to or managed by the second peer node. A special application or software tool, in addition to the potentially differing reservation tools of the asset-owner and the co-user, may be necessary to this end as well as for mapping back the reservation request to the reservation tool of the asset-owner. Said application may also provide for a simplified selectivity of assets, in case the asset-owner wants to restrict the number of his assets to be advertised and shared over the peer-to-peer computing system.

In a further variant of the invention, the access to a first asset of the asset-owner is restricted to such co-users which are subscribed or registered participants, while other assets of the same asset-owner continue to be accessible to a general public. The use of the first, particularly valuable asset such an expensive piece of equipment is thus limitable to trustworthy persons in an easy way.

In a still further variant, the peer-to-peer computing system is connected to billing applications or enterprise resource planning (ERP) systems. The ERP of the asset-owner provides for renting and/or invoicing details regarding a first asset during the reservation process. This information is transmitted to the co-user and his ERP system, and the co-user of the first asset is invoiced according to his reservation, via a standardised format of invoice message structure. Alternatively, a cost or usage balance is established if the co-user of the first asset owns himself assets which are in turn co-used by the first asset-owner. As a further alternative, automatic invoicing can be implemented with the registered participants, linked to a central billing service for managing inter-participant billing, which can accommodate multi-user lookups and multi-party partition of assets. Reporting on usage of assets and cost-sharing tracking is a natural extension of this billing application.

In a preferred embodiment, the tangible assets are mobile assets such as cars, laptop computers or conferencing equipment (beamers, video, etc). However, with these mobile assets, the timely availability depends strongly on the reliability of the previous user, i.e. if the latter returns the asset in due time.

Alternatively, the tangible assets are real estate properties or "building blocks" thereof such as individual rooms or halls or spaces. As opposed to mobile assets, these immobile assets have a fixed location from where they cannot be removed. In the case of a conference room in an office building, the booking facility is a conference room reservation tool at a first peer node operated by or on behalf of the asset-owner. The conference room reservation tool can be accessed by a potential co-user of the conference room, who himself is not the owner of said conference room, but whose computing means comprise a second peer node able to communicate with the first peer node over a network.

Before booking the room of his choice from his own office via a second peer node, a peer-to-peer participant and potential user has the capability to perform availability checks on all the rooms which are in close proximity to his own workplace. He can book the conference room at the "free for booking" time, at a stated published hourly rental rate. The user can, at the same time, arrange for beverages or snacks, and order special function room setups, such as video-conferencing equipment. A main benefit of the invention resides in the fact that a company or property owner can reduce office space, knowing that in case of need he has access to a pool of rooms in neighboring buildings.

### BRIEF DESCRIPTION OF THE DRAWINGS

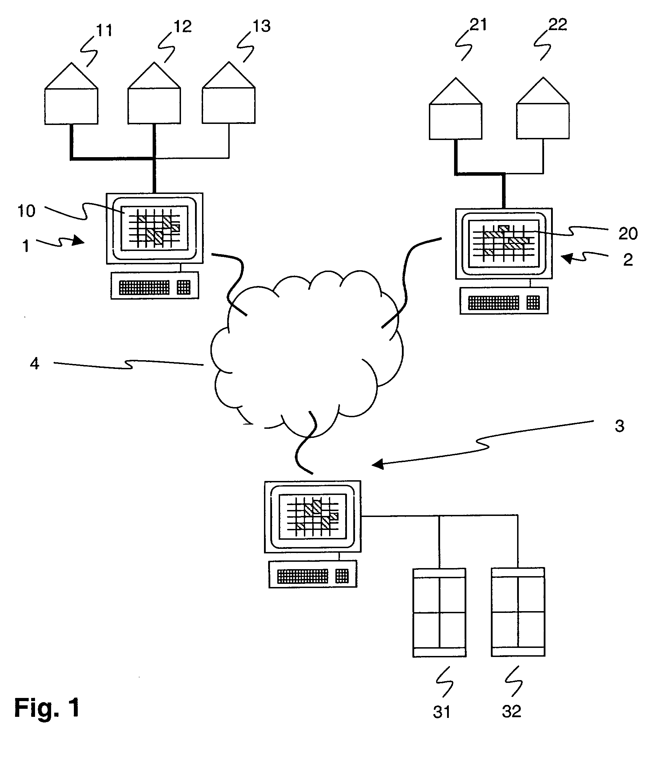

The subject matter of the invention will be explained in more detail in the following text with reference to preferred exemplary embodiments which are illustrated in the attached drawing
Fig.1 which schematically shows a peer-to-peer computing system.

The reference symbols used in the drawing, and their meanings, are listed in summary form in the list of reference symbols.

### DETAILED DESCRIPTION OF PREFERRED EMBODIMENTS

Fig.1 shows a network of interconnected computers or, in more general terms, computing means representing peer nodes 1,2,3 in a peer-to-peer system. On the hardware side, each peer node 1,2,3 comprises at least a processor; a port operable to couple the peer node to a network 4 such as the Internet and a memory operable to store program instructions executable by the processor. Each peer node 1,2,3 is assigned to or managing one or several resources 11,12,13; 21,22; 31,32 in the form of tangible assets. A first reservation application 10 allows the standard or preferential user, also called the "owner", at the first peer node 1 to access to "his" assets 11,12,13 and make reservations at will. Some of the assets 11,12,22, connected to the peer node via thick lines in Fig.1, are made available to other participants or co-users who are enabled to lodge reservations for themselves via their own peer node 2,3.

In the context of the peer-to-peer computing system depicted in Fig.1, a first user's computer at peer node 1 is linked to a conference room 11 by means of the reservation tool 10 featuring an occupancy schedule for said conference room 11. If a second user at peer node 2 is to be enabled to use the conference room 11, the first user must set his computer to allow access to the reservation tool 10 and/or share any corresponding file or database comprising said occupancy schedule. A special application or software tool (not shown in Fig.1) enables a mapping of the relevant content of the reservation tool 10 to the reservation tool 20 at peer node 2 and vice versa. This way, the occupancy schedule the conference room 11 appears within the reservation tool 20, and any reservation made through the reservation tool 20 at peer node 2 is mapped back to the reservation tool 10.

Firewall restrictions are addressed using web-services, an emerging technology for securely exposing business processes or services beyond inter-company firewalls. Furthermore, by assigning passwords to all or certain resources and distributing the former to registered users only, access control can be set up at any level

Many peer-to-peer approaches use an existing technology spearheaded by JXTA from Sun's Java development group. VistaPoint (www.vistaportal.com/products/vistapoint.htm) is a Java-based application that enables users to display data and information from multiple sources located on distributed peer computers through use of special P2P repository, query, reporting and charting tools over a network such as the Internet.

In general, office and home P2P networks operate over Ethernet and enable users of those networked computing means access to one another's hard drives, printers or perhaps a shared Internet connection. In effect, every connected computing means is at once a server and a client. There is no special network operating system that supports special server-side applications like directory services (specialized databases that control who has access to what). In a P2P environment, access rights are governed by setting sharing permissions on individual computing means.

The assets to be shared are announced to the peers of a peer-to-peer computing system as advertisements for resources to be discovered by other potential users. Advertisement and discovery in a peer-to-peer environment may be based on centralized discovery with a centralized index or else be based on net crawling. Discovery based on a centralized index is efficient, deterministic, and well suited for a static environment in which the resources are tangible assets. Such a method of discovery may also provide centralized control, provide a central point of failure, and provide easy denial of services. On the other hand, discovery based on net crawling is simple, adaptive, deterministic, inexpensive to scale, well suited for a dynamic environment and may also improve with aging. However, such a method of discovery may provide slower discovery than centralized control.

### LIST OF DESIGNATIONS

- 1,2,3: peer nodes, computing means
- 10,20,30: reservation tool
- 11,12,13; 21,22; 31,32: resources, tangible assets
- 4: network

## Claims

1. A peer-to-peer computing system comprising a plurality of peer nodes (1,2,3) configured to communicate with each other over a network (4) and further comprising means for advertising shared resources for discovery on said network, wherein a first peer node (1) is configured to communicate with a second peer node (2) enabled to access to a first resource (11) advertised on behalf of the first node,
**characterised in that** the first resource (11) is a tangible asset and **in that** the first peer node (1) comprises a first reservation tool (10) enabling the second peer node (2) to make a reservation for a time-limited use of said tangible asset (11).

2. The peer-to-peer computing system according to claim 1, **characterized in that** the second peer node (2) comprises a second reservation tool (20) enabling the second peer node (2) to make reservations for resources (21,22) assigned to the second peer node (2), and **in that** the tangible asset (11) is displayable within said second reservation tool (20) as a further resource assigned to the second peer node (2).

3. The peer-to-peer computing system according to claim 1, **characterized in that** the access to said tangible asset (11) is restricted to registered participants of the computing system.

4. The peer-to-peer computing system according to claim 1, **characterized in that** it comprises an accounting means for billing the second peer node (2) according to his reservation for use of said tangible asset (11).

5. The peer-to-peer computing system according to one of claims 1 to 4, **characterized in that** the tangible asset (11) is a mobile asset.

6. The peer-to-peer computing system according to one of claims 1 to 4, **characterized in that** the tangible asset (11) is a real estate property or an individual room, hall or space.

7. A peer-to-peer method for sharing tangible assets over a peer-to-peer computing system comprising a plurality of peer nodes (1,2,3) configured to communicate with each other over a network (4) and further comprising means for advertising shared resources for discovery on said network, wherein
a first tangible asset (11) is advertised on behalf of a first peer node (1),
a second peer node (2) seeking to access to the first tangible asset (11) makes a reservation for a time-limited use of the first tangible asset via a reservation tool (10) at the first peer node (1).

8. A first peer node (1) as part of a peer-to-peer computing system comprising a plurality of peer nodes (1,2,3) configured to communicate with each other over a network (4) and further comprising means for advertising shared resources for discovery on said network, wherein the first peer node (1) is configured to communicate with a second peer node (2) enabled to access to a first resource (11) advertised on behalf of the first node (1),
**characterised in that** the first resource (11) is a tangible asset and **in that** the first peer node (1) comprises a first reservation tool (10) enabling the second peer node (2) to make a reservation for a time-limited use of said first tangible asset (11).
